# EUROPEAN PATENT SPECIFICATION

(11) **EP 3 701 702 B1**
(45) Date of publication and mention of the grant of the patent: **26.06.2024**
(21) Application number: 18800402.2
(22) Date of filing: 20.10.2018
(51) Int. Cl.: H04W 4/24, H04L 12/14, H04L 67/561, G06Q 30/0201

(54) **DATA INSPECTION FOR NETWORK CHARGING AND POLICY TREATMENT**
DATENPRÜFUNG FÜR NETZWERKAUFLADUNG UND BEHANDLUNG VON RICHTLINIEN
INSPECTION DE DONNÉES POUR FACTURATION DE RÉSEAU ET TRAITEMENT DE POLITIQUE

(30) Priority: 24.10.2017 US 201715792421
(43) Date of publication of application: 02.09.2020
(73) Proprietor: Cisco Technology, Inc., San Jose, CA 95134 (US)
(72) Inventor: LA ROCHE, Humberto J., Ocean New Jersey 07712 (US); SELDIN, Anatoly, 93185 Jerusalem (IL); KREINES, Alexander, 96348 Jerusalem (IL); GREENBERG, Anna, 9837008 Maale Adumim (IL); ZEVIN, Sara, 97701 Jerusalem (IL); KASUM, Armin, Southborough Massachusetts 01772 (US); KERSTEIN, Roie, 9638211 Jerusalem (IL)
(74) Representative: Noble, Nicholas
(86) International application number: PCT/US2018/056811
(87) International publication number: WO 2019/083860

(56) References cited:
- WO-A2-2016/186885
- US-A1- 2004 054 629
- US-A1- 2011 202 634
- US-A1- 2016 182 244
- US-B1- 7 512 973
- US-B1- 7 975 003

## Description

### TECHNICAL FIELD

The present disclosure relates generally to wireless networks, and in particular, inspecting data transferred over a wireless network to determine a charging and/or policy treatment.

### BACKGROUND

In order to increase revenue, a mobile network operator (MNO) can attempt to increase the number of their subscribers. However, as population network connectivity reaches saturation, this may be difficult, resulting in competition from other MNOs that drives down prices and, ultimately, decreases revenue for the MNO.

US2016182244 relates to charging for multimedia content, such as Multimedia Broadcast Multicast Service, MBMS, content, that is provided for subscriber consumption through a communication network, such as a wireless communication network. One aspect of the teachings involves the advantageous inclusion of content location information in the context of generating or sending charging-related messages, in association with requested multimedia content. The content location information indicates, for example, whether the requested multimedia content is available for delivery to a subscriber device associated with the request from a data store that internal to the network. This functionality enables differentiated charging as a function of the content location indicated by the content location information included in the charging-related message. 2004/054629 A1 discloses methods for accessing content securely.

### BRIEF DESCRIPTIONS OF THE DRAWINGS

For a better understanding of aspects of the various implementations described herein and to show more clearly how they may be carried into effect, reference is made, by way of example only, to the accompanying drawings.
Figure 1 is a functional block diagram of a wireless communications environment in accordance with various implementations.
Figure 2 is a data diagram of a token in accordance with some implementations.
Figure 3 is a flowchart representation of a method of applying a charging and/ or policy treatment to a flow including content in accordance with some implementations.
Figure 4 is a flowchart representation of a method of applying a charging and/ or policy treatment to an encrypted flow including content in accordance with some implementations.
Figure 5 is a flowchart representation of a method of inspecting data to determine a charging treatment in accordance with some implementations.
**9.** Figure 6 is a block diagram of an example of a device in accordance with some implementations.

**10.** In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION OF EXAMPLE EMBODIMENTS

**11.** Numerous details are described herein in order to provide a thorough understanding of illustrative implementations shown in the drawings. However, the drawings merely show some example aspects of the present disclosure and are therefore not to be considered limiting. Those of ordinary skill in the art will appreciate from the present disclosure that other effective aspects and/or variants do not include all of the specific details described herein. Moreover, well-known systems, methods, components, devices and circuits have not been described in exhaustive detail so as not to unnecessarily obscure more pertinent aspects of the implementations described herein.

### OVERVIEW

**12.** The invention is defined by the independent claims. Further embodiments are defined by the dependent claims.

### EXAMPLE EMBODIMENTS

**13.** As network connectivity of the general population reaches saturation, MNOs can attempt to increase their revenue by methods other than obtaining new subscribers. For example, an MNO can attempt to increase revenue by increasing the subscription cost per subscriber. In various implementations, an MNO can attempt to increase subscription cost per subscriber by offering content (such as video, audio, entertainment, etc.) provided by a content provider over the MNO's network.

**14.** In various implementations, the MNO provides the content to the subscriber (e.g., via an app) and charges the subscriber directly for content consumption (and network usage) while also reimbursing the content provider for use of their content. In various implementations, the content provider provides the content (e.g., via an app) and charges the subscriber directly for content consumption while also reimbursing the MNO for use of their network. In various implementations, the MNO transports the content free-of-charge (so-called "zero rating") while recovering costs through bit-rate control of the content.

**15.** Tracking content consumption in order to implement these charging schemes (and others) can be difficult. In some embodiments, the app itself tracks the content consumed by the subscriber and reports back to the MNO (and/or the content provider) the bandwidth consumed. However, various such embodiments are not reliable as MNOs charging functions, do not scale well, and are not easy to integrate with existing charging functions. Further, such embodiments do not provide security capabilities for revenue protection, as the app can be manipulated by a user intent on fraud.

**16.** Accordingly, in various implementations, metadata associated with the content is passed in the form of a token from the content provider to the MNO. The MNO interprets the token as specifying a charging (and/or policy) treatment to be applied to the flow associated with the content.

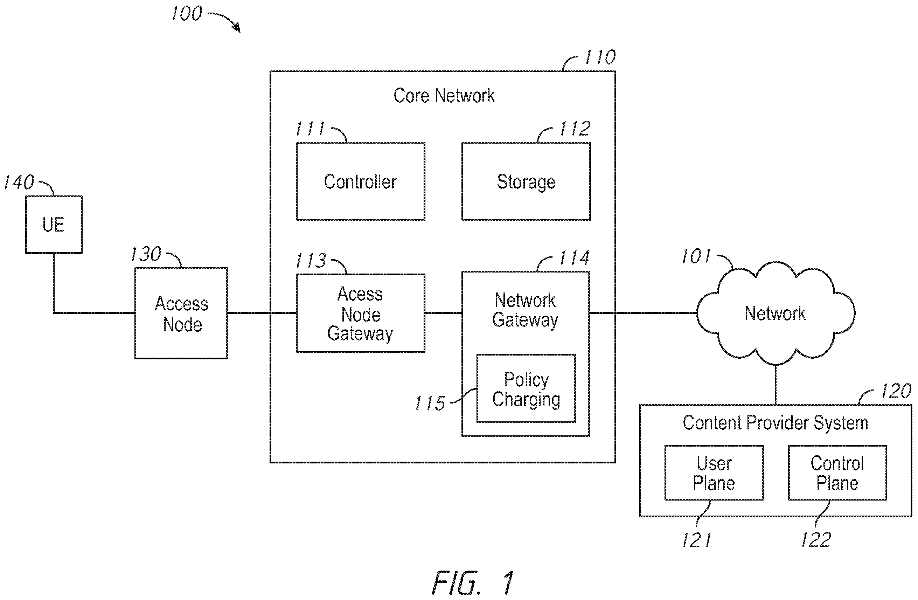

**17.** Figure 1 is a functional block diagram of a wireless communications environment 100 in accordance with some implementations. The wireless communications environment 100 includes a core network 110 which may be operated by a mobile network operator (MNO). The wireless communications environment 100 also includes a content provider system 120 which may be operated by a content provider. In various implementations, the content provider and the MNO are separate entities. In various implementations, the content provider and the MNO are the same entity.

**18.** The core network 110 and the content provider system 120 are coupled via a network 101. In various implementations, the network 101 includes any public or private LAN (local area network) and/or WAN (wide area network), such as an intranet, an extranet, a virtual private network, and/or portions of the Internet.

**19.** The core network 110 is coupled to an access node 130 that provides wireless network access to a user equipment 140 (e.g., a smartphone, a tablet, a laptop, etc.). Although Figure 1 only illustrates a single access node 130 and a single user equipment 140, it is to be appreciated that the wireless communications environment can include multiple access nodes and multiple user equipments. In various implementations, the access node 130 is an eNodeB. In various implementations, the access node 130 is a BSS (base station subsystem), including, among other things, a BST (base transceiver station), a BSC (base station controller), and a PCU (packet control unit). In various implementations, the access node 130 is a gNodeB.

**20.** The core network 110 includes a network gateway 114 that serves as the interface for the core network 110 and the network 101. In various implementations, the network gateway 114 includes a PGW (PDN [packet data network] gateway). In various implementations, the network gateway 114 includes a GGSN (GPRS [general packet radio service] support node).

**21.** The core network 110 includes an access node gateway 113 that serves as a router for data from the network 101 to the access node 130. In various implementations, the access node gateway 113 includes an SGW (serving gateway). In various implementations, the access node gateway 113 includes an SGSN (serving GPRS support node).

**22.** The core network 110 includes a controller 111 and storage 112. The controller 111 serves to control high-level operation of the core network 110 through signaling messages (e.g., to the access node gateway 113 and/or the network gateway 114). In various implementations, the controller 111 includes an MME (mobile management entity). In various implementations, the storage 112 includes an HSS (home subscriber server) that stores information about the core network's subscribers.

**23.** Although certain components of the core network 110 are illustrated in Figure 1, it is to be appreciated that, in various implementations, the core network 110 includes additional components.

**24.** The network gateway 114 includes a policy/charging module 115 that inspects data incoming from the network 101 and applies policy and charging rules to the data. In various implementations, the policy/charging module includes a PCEF (policy and charging enforcement function). In various implementations, the policy/charging module 115 is controlled by a PCRF (policy and charging rules function) of the core network 110, separate from the network gateway 114.

**25.** The content provider system 120 includes a user plane 121 and a control plane 122. The control plane 122 communicates, via the network 101, with the user equipment 140, enabling the user equipment 140 to retrieve content. In various implementations, the control plane 122 provides a program guide (e.g., an EPG [electronic program guide] that lists video titles (live or VOD [video on demand]) that can be retrieved by the user equipment 140. In various implementations, the user equipment 140 authenticates with the control plane 122 and a subscriber profile stored by the content provider system 120 is used to provide an indication as to which content the user equipment 140 can retrieve. The user plane 121 receives requests for content from the user equipment 140 and, if properly authenticated, provides the content to the user equipment 140.

**26.** When the content provider system 120 receives a selection of content (e.g., a video title) from the user equipment 140, the control plane 121 provides an authenticated token to the user equipment 140 to be used by the user equipment 140 in requesting the content from the user plane 122.

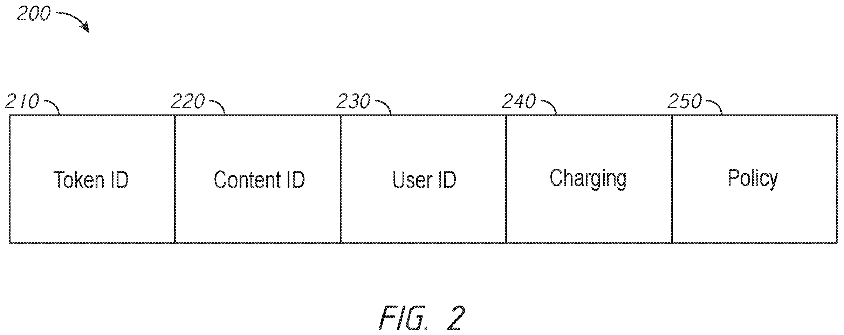

**27.** Figure 2 is a data diagram of a token 200 in accordance with some implementations. In various implementations, the token 200 includes a token identifier field 210 that includes a value identifying the token, a content identifier field 220 that includes a value identifying the selected content, and a user identifier field 230 that includes a value that identifies the user equipment 140 (or a user thereof). In various implementations, the user identifier field 230 includes a federated identity, establishing a joint identity context between the content provider system 120 and the core network 110. Thus, both the content provider system 120 and the core network 110 both have access to a common identity that is known to be authentic. One example of a federated identity mechanism is the GSMA (Global System for Mobile Communications Association) Mobile Connect framework, which itself relies on the GAA (generic authentication architecture) in 3GPP.

**28.** In various implementations, the token 200 includes a charging field 240 that includes a value that indicates the charging treatment that the core network 110 is to apply to the flow including the selected content. The charging treatment can specify, for example, a cost to be charged a subscriber associated with the user equipment 140 and/or a cost to be charged to the content provider managing the content provider system 120. In various implementations, the charging treatment can specify a type of usage data to be stored, e.g., a time connected or a bandwidth used, that can be correlated to a cost by the core network 110, a component thereof (such as a the policy/ charging module 115), or a separate billing system of the MNO.

**29.** In various implementations, the token 200 includes a policy field 250 that includes a value that indicates a policy treatment that the core network 110 is to apply to the flow including the selected content. The policy treatment can specify, for example, a QoS (quality of service) the core network 110 is to provide the flow.

**30.** In various implementations, the charging field 240 (and/or policy field 250) is generated on a per subscriber basis, the charging and/or policy treatment being selected by the control plane 121 based on subscriber properties (e.g., a media plan associated with an account logged into by the user equipment 140) and metadata of the selected content (e.g., whether the selected content is included in the media plan).

**31.** Although certain fields of the token 200 are illustrated in Figure 2, it is to be appreciated that, in various implementations, the token 200 can lack some of the illustrated fields or include additional fields, such as a time field indicating a time the token 200 is valid or a metadata field indicating parameters of the token 200. In various implementations, the token 200 is signed or otherwise encrypted.

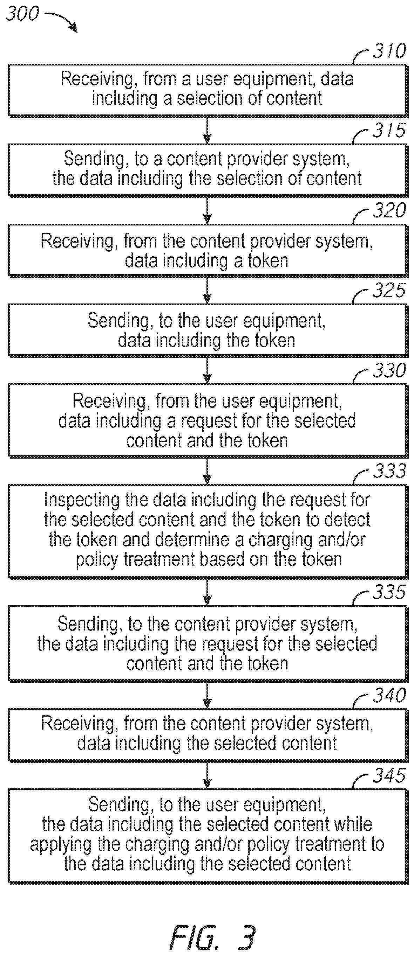

**32.** Figure 3 is a flowchart representation of a method 300 of applying a charging and/or policy treatment to a flow including content in accordance with some implementations. In some implementations (and as detailed below as an example), the method 300 is performed by a core network, such as the core network 110 of Figure 1, or a portion thereof, such as the network gateway 114 of Figure 1. In some implementations, the method 300 is performed by processing logic, including hardware, firmware, software, or a combination thereof. In some implementations, the method 300 is performed by a processor executing code stored in a non-transitory computer-readable medium (e.g., a memory).

**33.** The method 300 begins with a user equipment sending a selection of content to a content provider system (e.g., to the control plane 121 of the content provider system 120 of Figure 1). Accordingly, in block 310, the core network receives, from the user equipment, data including a selection of content and, in block 315, the core network sends, to the content provider system, the data including the selection of content.

**34.** The method 300 continues with the content provider system, in response to receiving the selection of content, sending a token to the user equipment. In various implementations, the token has the properties (including, but not limited to, the fields) of the token 200 of Figure 2. Accordingly, in block 320, the core network receives, from the content provider system, data including a token and, in block 325, the core network sends, to the user equipment, the data including the token. As described above, in various implementations, the content provider system generates the token based on subscriber properties and metadata of the selected content.

**35.** The method 300 continues with the user equipment sending a request for the selected content, including the token, to the content provider system (e.g., the user plane 122 of the content provider system 120 of Figure 1). Accordingly, in block 330, the core network receives, from the user equipment, data including the request for the selected content and the token and, in block 335 the core network sends, to the content provider system, the data including the request for the selected content and the token.

**36.** In block 333, the core network (e.g., the network gateway 114 of the core network 110 of Figure 1), inspects the data including the request for the selected content and the token to detect the token and determine a charging and/or policy treatment based on the token. In various implementations, the token includes a charging field that indicates a charging treatment (e.g., has a value that maps to a charging treatment in a table stored by the core network). In various implementations, the token includes a policy field that indicates a policy treatment (e.g., has a value that maps to a policy treatment in a table stored by the core network). In various implementations, the token includes a charging and policy field that has a single value that indicates both a charging treatment and a policy treatment.

**37.** In various implementations, the core network further determines a user identifier based on the token. In various implementations, the token includes a user identifier field that includes a value identifying the user equipment. If the core network determines that the user identifier based on the token fails to match a user identifier of the user equipment known to the core network, the core network does not send (in block 335) the data including the request for the selected content to the content provider system and/or does not send (in block 345, described below) the data including the selected content to the user equipment. Accordingly, the core network implements security technology to prevent a malicious user from having unauthorized access to services from the content provider system via tampering with the user equipment and impersonating a no-cost or low-cost token.

**38.** The method 300 continues with the content provider system, in response to receiving the request for the selected content, sending the selected content (now also "the requested content") to the user equipment. Accordingly, in block 340, the core network receives, from the content provider system, data including the selected content and, in block 345, the core network sends, to the user equipment, the data including the selected content. In sending the selected content to the user equipment, the core network applies the charging and/or policy treatment to the data including the selected content. For example, in applying a charging treatment, the core network can store information regarding a cost to be charged a subscriber associated with the user equipment and/or a cost to be charged to the content provider managing the content provider system for forwarding the selected content from the content provider system to the user equipment. As another example, in applying a charging treatment, the core network can store a specified type of usage data, e.g., a time connected or a bandwidth used, that can be correlated to a cost by the core network, a component thereof (such as a the policy/charging module), or a separate billing system of the MNO. As another example, in applying a policy treatment, the core network can send the data including the selected content with a QoS indicated by the policy treatment.

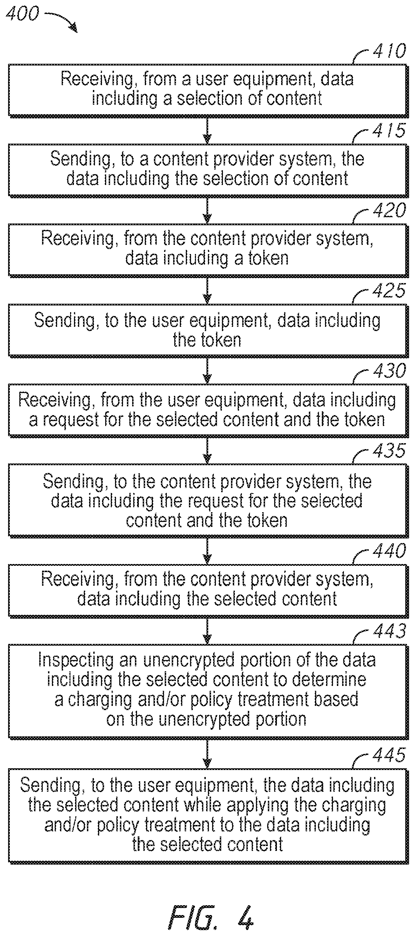

**39.** In various implementations, such as when traffic over the network is encrypted with TLS (transport layer security), the core network is unable to inspect data to detect the token (as in block 333 of Figure 3). In such implementations, the method 400 of Figure 4 may be used.

**40.** Figure 4 is a flowchart representation of a method 400 of applying a charging and/or policy treatment to an encrypted flow including content in accordance with some implementations. In some implementations (and as detailed below as an example), the method 400 is performed by a core network, such as the core network 110 of Figure 1, or a portion thereof, such as the network gateway 114 of Figure 1. In some implementations, the method 400 is performed by processing logic, including hardware, firmware, software, or a combination thereof. In some implementations, the method 400 is performed by a processor executing code stored in a non-transitory computer-readable medium (e.g., a memory).

**41.** The method 400 begins with a user equipment sending a selection of content to a content provider system (e.g., to the control plane 121 of the content provider system 120 of Figure 1). Accordingly, in block 410, the core network receives, from the user equipment, data including a selection of content and, in block 415, the core network sends, to the content provider system, the data including the selection of content.

**42.** The method 400 continues with the content provider system, in response to receiving the selection of content, sending a token to the user equipment. In various implementations, the token has the properties (including, but not limited to, the fields) of the token 200 of Figure 2. Accordingly, in block 420, the core network receives, from the content provider system, data including a token and, in block 425, the core network sends, to the user equipment, the data including the token. As described above, in various implementations, the content provider system generates the token based on subscriber properties and metadata of the selected content.

**43.** The method 400 continues with the user equipment sending a request for the selected content, including the token, to the content provider system (e.g., the user plane 122 of the content provider system 120 of Figure 1). Accordingly, in block 430, the core network receives, from the user equipment, data including the request for the selected content and the token and, in block 435 the core network sends, to the content provider system, the data including the request for the selected content and the token.

**44.** In various implementations, the token is processed by the content provider system (e.g., the user plane 121 of the content provider system 120 of Figure 1) to perform security checks on the token and verify the binding between the token and the user equipment requesting the selected content.

**45.** The method 400 continues with the content provider system, in response to receiving the request for the selected content, sending the selected content (now also "the requested content") to the user equipment. Accordingly, in block 440, the core network receives, from the content provider system, data including the selected content and, in block 445, the core network sends, to the user equipment, the data including the selected content.

**46.** In block 443, the core network (e.g., the network gateway 114 of the core network 110 of Figure 1) inspects an unencrypted portion of the data including the selected content to determine a charging and/or policy treatment based on the unencrypted portion. In various implementations, the content provider system (e.g., the user plane 121 of the content provider system 120 of Figure 1) labels each packet in the data flow sent to the user equipment according to the charging and/or policy treatment that is to be applied by the core network to the packet, as determined based on the token (e.g., the values in the charging field and/or policy field). The label is included in an unencrypted portion of the data. For example, in various implementations, the label is included in the "option" field of the TCP (transmission control protocol) header, which is not encrypted in TLS. Accordingly, in various implementations, the unencrypted portion of the data inspected by the core network includes at least a portion of a header.

**47.** In various implementations, the label includes two bytes for the charging value and/or policy value (included in the charging field and/or policy field of the token and a four-byte HMAC (hash-based message authentication code) signature calculated by applying a cryptographic hash function to the charging value and/or policy value and the packet payload (in order to prevent policy forging by mechanical attachment of the option field to a different packet) and, then, truncating the result to the first four bytes.

**48.** In sending the selected content to the user equipment (in block 445), the core network applies the charging and/or policy treatment to the data including the selected content. For example, in applying a charging treatment, the core network can store information regarding a cost to be charged a subscriber associated with the user equipment and/or a cost to be charged to the content provider managing the content provider system for forwarding the selected content from the content provider system to the user equipment. As another example, in applying a charging treatment, the core network can store a specified type of usage data, e.g., a time connected or a bandwidth used, that can be correlated to a cost by the core network, a component thereof (such as a the policy/charging module), or a separate billing system of the MNO. As another example, in applying a policy treatment, the core network can send the data including the selected content with a QoS indicated by the policy treatment.

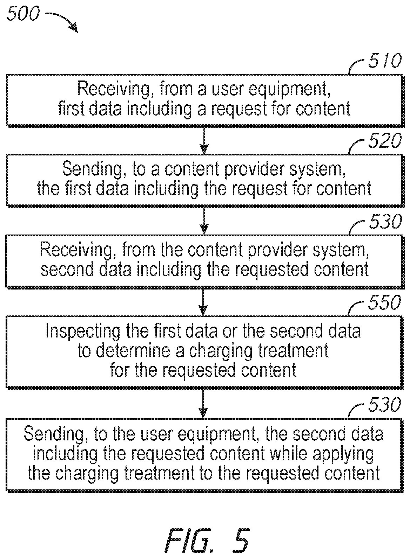

**49.** Figure 5 is a flowchart representation of a method 500 of inspecting data to determine charging treatment in accordance with some implementations. In some implementations (and as detailed below as an example), the method 500 is performed by a core network, such as the core network 110 of Figure 1, or a portion thereof, such as the network gateway 114 of Figure 1. In some implementations, the method 500 is performed by processing logic, including hardware, firmware, software, or a combination thereof. In some implementations, the method 500 is performed by a processor executing code stored in a non-transitory computer-readable medium (e.g., a memory).

**50.** The method 500 begins, in block 510, with the core network receiving, from a user equipment, first data including a request for content. The method 500 continues, in block 520, with the core network sending, to a content provider system, second data including the requested content.

**51.** The method 500 continues, in block 530, with the core network receiving, from the content provider system, second data including the requested content.

**52.** The method 500 continues, in block 540, with the core network inspecting the first data or the second data to determine a charging treatment for the requested content. In various implementations, the first data further includes a token indicating the charging treatment and inspecting the first data or the second data includes detecting the token in the first data and determining the charging treatment based on the token. In various implementations, the token further indicates a user identifier associated with the user equipment usable to validate the request for content. In various implementations, the core network validates the request for the content based on the user identifier. In various implementations, the content provider system validates the request for content based on the user identifier.

**53.** In various implementations, inspecting the first data or the second data includes detecting a label indicating the charging treatment in an unencrypted portion of the second data and determining the charging treatment based on the label. In various implementations, the unencrypted portion of the second data includes a TCP header.

**54.** The method 500 continues, at block 550, with the core network sending, to the user equipment, the second data including the requested content while applying the charging treatment to the requested content.

**55.** In various implementations, applying the charging treatment comprises storing information regarding a cost to be charged a subscriber associated with the user equipment and/or a cost to be charged (or reimbursed) to the content provider managing the content provider system. In various implementations, applying the charging treatment comprises storing a type of usage data specified by the charging treatment, e.g., a time connected or a bandwidth used, that can be correlated to a cost by the core network, a component thereof (such as a the policy/charging module), or a separate billing system of the MNO.

**56.** In various implementations, the charging treatment indicates a cost to be charged to the subscriber and a cost to be reimbursed to the content provider. In various implementations, the charging treatment indicates a cost to be charged to the content provider to reimburse the MNO for use of the core network. In various implementations, the charging treatment indicates a type of usage data to be stored, e.g., a time connected or a bandwidth used, that can be correlated to a cost by the core network, a component thereof (such as a the policy/charging module), or a separate billing system of the MNO.

**57.** In various implementations, in addition to inspecting the first data or the second data to determine the charging treatment, the core network inspects the first data or the second data to determine a policy treatment for the requested content and sends the second data to the user equipment according the policy treatment. In various implementations, sending the second data to the user equipment according the policy treatment includes sending the second data (e.g., content data) to the user equipment according to a specified quality-of-service. For example, in various implementations, data indicative of the policy treatment is sent to an access node by way of a controller and the access node provides (or enforces) the specified quality-of-service.

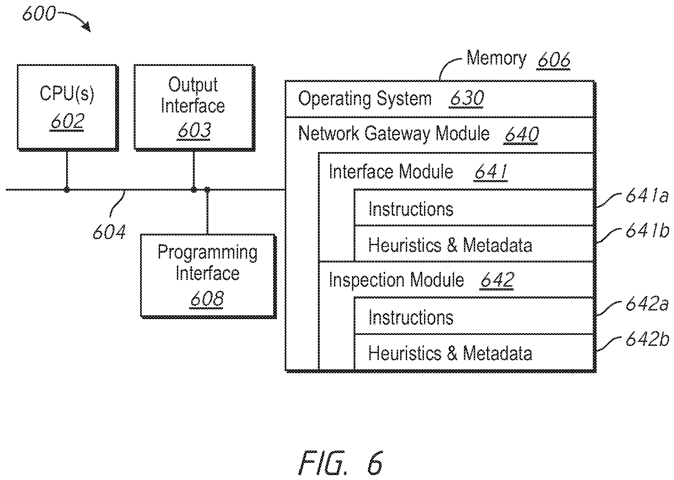

**58.** Figure 6 is a block diagram of a computing device 600 in accordance with some implementations. In some implementations, the computing device 600 corresponds to the core network 110 of Figure 1 and/or the network gateway 114 of Figure 1 and performs one or more of the functionalities described above with respect to those systems. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 600 includes one or more processing units (CPU's) 602 (e.g., processors), one or more output interfaces 603 (e.g., a network interface), a memory 606, a programming interface 608, and one or more communication buses 604 for interconnecting these and various other components.

**59.** In some implementations, the communication buses 604 include circuitry that interconnects and controls communications between system components. The memory 606 includes high-speed random access memory, such as DRAM, SRAM, DDR RAM or other random access solid state memory devices; and, in some implementations, include non-volatile memory, such as one or more magnetic disk storage devices, optical disk storage devices, flash memory devices, or other non-volatile solid state storage devices. The memory 606 optionally includes one or more storage devices remotely located from the CPU(s) 602. The memory 606 comprises a non-transitory computer readable storage medium. Moreover, in some implementations, the memory 606 or the non-transitory computer readable storage medium of the memory 606 stores the following programs, modules and data structures, or a subset thereof including an optional operating system 630 and a network gateway module 640. In some implementations, one or more instructions are included in a combination of logic and non-transitory memory. The operating system 630 includes procedures for handling various basic system services and for performing hardware dependent tasks. In some implementations, the network gateway module 640 is configured to connect user equipment to a network. To that end, the network gateway module 640 includes an interface module 641 and an inspection module 642.

**60.** In some implementations, the interface module 641 is configured to receive, from a user equipment, first data including a request for content. To that end, the interface module 641 includes a set of instructions 641a and heuristics and metadata 641b. In some implementations, the interface module 641 is further configured to send, to a content provider system, the first data including the request for content. In some implementations, the interface module 641 is further configured to receive, from the content provider system, second data including the requested content. In some implementations, the inspection module 642 is configured to inspect the first data or the second data to determine a charging treatment for the requested content. To that end, the inspection module 642 includes a set of instructions 642a and heuristics and metadata 62b. In some implementations, the interface module 641 is further configured to send, to the user equipment, the second data including the requested content while applying the charging treatment to the requested content.

**61.** Although the network gateway module 640, the interface module 641, and the inspection module 642 are illustrated as residing on a single computing device 600, it should be understood that in other embodiments, any combination of the network gateway module 640, the interface module 641, and the inspection module 642 can reside in separate computing devices in various implementations. For example, in some implementations, each of the network gateway module 640, the interface module 641, and the inspection module 642 reside on a separate computing device.

**62.** Moreover, Figure 6 is intended more as functional description of the various features which are present in a particular implementation as opposed to a structural schematic of the embodiments described herein. As recognized by those of ordinary skill in the art, items shown separately could be combined and some items could be separated. For example, some functional modules shown separately in Figure 4 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

**63.** The present disclosure describes various features, no single one of which is solely responsible for the benefits described herein. It will be understood that various features described herein may be combined, modified, or omitted, as would be apparent to one of ordinary skill. Other combinations and subcombinations than those specifically described herein will be apparent to one of ordinary skill, and are intended to form a part of this disclosure. Various methods are described herein in connection with various flowchart steps and/ or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

**64.** Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be embodied in such program instructions, although some or all of the disclosed functions may alternatively be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state.

**65.** The disclosure is not intended to be limited to the implementations shown herein. Various modifications to the implementations described in this disclosure may be readily apparent to those skilled in the art, and the generic principles defined herein may be applied to other implementations without departing from the scope of this disclosure. The teachings of the invention provided herein can be applied to other methods and systems, and are not limited to the methods and systems described above, and elements and acts of the various embodiments described above can be combined to provide further embodiments. Accordingly, the novel methods and systems described herein may be embodied in a variety of other forms; furthermore, various omissions, substitutions and changes in the form of the methods and systems described herein may be made without departing from the scope of the disclosure.

## Claims

1. A method comprising:
following receipt by a content provider system of a selection of content from a user equipment, communicating (325), via a core network, a token to the user equipment based on the user equipment being authenticated by the content provider system to retrieve content from the content provider system;
receiving (330), from the user equipment by the core network, first data including a request for content and the token;
sending (335), to the content provider system, the first data including the request for content and the token;
subsequent to the content provider system performing security checks on the token and verifying a binding between the token and the user equipment, receiving (340), from the content provider system, second data including the requested content;
inspecting the token in the first data to determine a charging treatment for the requested content; and
sending (345), to the user equipment, the second data including the requested content while applying the charging treatment to the requested content.

2. The method of claim 1, wherein applying the charging treatment comprises storing information regarding a cost to be charged a subscriber associated with the user equipment and/or a cost to be charged to the content provider managing the content provider system.

3. The method of claim 1, wherein applying the charging treatment comprises storing a type of usage data indicated by the charging treatment that can be correlated to a cost to be charged a subscriber associated with the user equipment and/or a cost to be charged to the content provider managing the content provider system.

4. The method of any preceding claim, wherein the token further indicates a user identifier associated with the user equipment usable to validate the request for content.

5. The method of any preceding claim, further comprising inspecting the first data or the second data to determine a policy treatment for the requested content, wherein the second data is sent to the user equipment according to the policy treatment.

6. The method of claim 5, wherein sending the second data to the user equipment according the policy treatment includes sending the second data to the user equipment according to a specified quality-of-service.

7. The method of any preceding claim, wherein inspecting the first data to determine the charging treatment for the requested content includes operating a packet data network gateway that inspects the first data.

8. A system arranged to perform the method of any preceding claim.

9. A non-transitory computer-readable medium having instructions encoded thereon which, when executed by a processor, cause the processor to perform the method of any of claims 1 to 7.

## Patentansprüche

1. Ein Verfahren, das Folgendes aufweist:
Kommunizieren (325) eines Tokens an das User-Equipment über ein Kernnetzwerk, nachdem ein Inhaltsanbieter-System eine Auswahl von Inhalten von einem User-Equipment empfangen hat, basierend darauf, dass das User-Equipment durch das Inhaltsanbieter-System authentifiziert wurde, um Inhalte von dem Inhaltsanbieter-System abzurufen;
Erhalten (330) erster Daten, von dem User-Equipment durch das Kernnetzwerk, die eine Anforderung von Inhalten und das Token beinhalten;
Senden (335) an das System des Inhaltsanbieters, wobei die ersten Daten die Anforderung des Inhalts und das Token inkludieren;
nachdem das System des Inhaltsanbieters Sicherheitsprüfungen an dem Token durchgeführt und eine Bindung zwischen dem Token und dem User-Equipment verifiziert hat, Erhalten (340) von dem System des Inhaltsanbieters von zweiten Daten, die den angeforderten Inhalt beinhalten;
Inspizieren des Tokens in den ersten Daten zur Bestimmung eines Ladevorgangs für den
gewünschte Inhalte; und
Senden (345) der zweiten Daten, die den angeforderten Inhalt beinhalten, an das User-Equipment, während der Ladevorgang auf den angeforderten Inhalt angewendet wird.

2. Das Verfahren nach Anspruch 1, bei dem die Anwendung des Ladevorgangs das Speichern von Informationen über Kosten aufweist, die einem mit dem User-Equipment verbundenen Teilnehmer in Rechnung gestellt werden sollen, und/oder über Kosten, die dem Inhaltsanbieter, der das System des Inhaltsanbieters verwaltet, in Rechnung gestellt werden sollen.

3. Das Verfahren nach Anspruch 1, wobei die Anwendung des Ladevorgangs das Speichern eines Typs von Nutzungsdaten aufweist, die durch den Ladevorgang angezeigt werden und die mit den Kosten, die einem mit dem User-Equipment verbundenen Teilnehmer in Rechnung gestellt werden sollen, und/oder mit den Kosten, die dem Inhaltsanbieter, der das System des Inhaltsanbieters verwaltet, in Rechnung gestellt werden sollen, korreliert werden können.

4. Das Verfahren nach einem der vorhergehenden Ansprüche, wobei das Token außerdem einen User-Identifizierer angibt, der mit dem User-Equipment verbunden ist und zur Validierung der Anforderung von Inhalten verwendet werden kann.

5. Das Verfahren nach einem der vorhergehenden Ansprüche weist ferner das Inspizieren der ersten Daten oder der zweiten Daten auf, um eine Richtlinienbehandlung für den angeforderten Inhalt zu bestimmen, wobei die zweiten Daten entsprechend der Richtlinienbehandlung an das User-Equipment gesendet werden.

6. Das Verfahren nach Anspruch 5, wobei das Senden der zweiten Daten an das User-Equipment gemäß der Richtlinienbehandlung das Senden der zweiten Daten an das User-Equipment gemäß einer spezifizierten Dienstqualität beinhaltet.

7. Das Verfahren nach einem der vorhergehenden Ansprüche, bei dem das Inspizieren der ersten Daten zur Bestimmung des Ladevorgangs für den angeforderten Inhalt das Betreiben eines Netzwerk-Gateways für Paketdaten einschließt, das die ersten Daten inspiziert.

8. Ein System, das zur Durchführung des Verfahrens nach einem der vorhergehenden Ansprüche eingerichtet ist.

9. Ein nicht-transitorisches, computerlesbares Medium mit darauf kodierten Anweisungen, die, wenn sie von einem Prozessor ausgeführt werden, den Prozessor veranlassen, das Verfahren nach einem der Ansprüche 1 bis 7 durchzuführen.

## Revendications

1. Procédé comprenant :
suite à la réception, par un système fournisseur de contenu, d'une sélection de contenu provenant d'un équipement utilisateur, la communication (325), via un réseau central, d'un jeton à l'équipement utilisateur, en se basant sur l'équipement utilisateur ayant été authentifié par le système fournisseur de contenu, afin de récupérer le contenu du système fournisseur de contenu ;
la réception (330) en provenance de l'équipement utilisateur, par le réseau central, de premières données comprenant une demande de contenu et le jeton ;
l'envoi (335), au système fournisseur de contenu, des premières données comprenant une demande de contenu et le jeton ;
après que le système fournisseur de contenu a effectué des contrôles de sécurité sur le jeton et qu'il a vérifié une liaison entre le jeton et l'équipement utilisateur, le procédé comprend la réception (340), en provenance du système fournisseur de contenu, de deuxièmes données comprenant le contenu demandé ;
l'inspection du jeton dans les première données, afin de déterminer un traitement de facturation pour le contenu demandé ; et
l'envoi (345), à l'équipement utilisateur, des deuxièmes données comprenant le contenu demandé, tout en appliquant le traitement de facturation au contenu demandé.

2. Procédé selon la revendication 1, dans lequel l'application du traitement de facturation comprend le stockage d'informations concernant un coût devant être facturé à un abonné associé à l'équipement utilisateur et/ou concernant un coût devant être facturé au fournisseur de contenu gérant le système fournisseur de contenu.

3. Procédé selon la revendication 1, dans lequel l'application du traitement de facturation comprend le stockage d'un type de données d'utilisation, ledit type étant indiqué par le traitement de facturation qui peut être corrélé à un coût devant être facturé à un abonné associé à l'équipement utilisateur et/ou corrélé à un coût devant être facturé au fournisseur de contenu gérant le système fournisseur de contenu.

4. Procédé selon l'une quelconque des revendications précédentes, dans lequel le jeton indique en outre un identifiant utilisateur associé à l'équipement utilisateur, ledit identifiant étant utilisable pour valider la demande de contenu.

5. Procédé selon l'une quelconque des revendications précédentes, comprenant en outre l'inspection des première données ou des deuxièmes données, afin de déterminer un traitement de politique pour le contenu demandé, procédé dans lequel les deuxièmes données sont envoyées à l'équipement utilisateur conformément au traitement de politique.

6. Procédé selon la revendication 5, dans lequel l'envoi des deuxièmes données à l'équipement utilisateur conformément au traitement de politique comprend l'envoi des deuxièmes données à l'équipement utilisateur conformément à une qualité de service spécifiée.

7. Procédé selon l'une quelconque des revendications précédentes, dans lequel l'inspection des premières données afin de déterminer le traitement de facturation pour le contenu demandé comprend l'exploitation d'une passerelle de réseau de données par paquets, ladite passerelle inspectant les premières données.

8. Système agencé pour mettre en oeuvre le procédé selon l'une quelconque des revendications précédentes.

9. Support non transitoire lisible par ordinateur, support sur lequel sont codées des instructions qui, lorsqu'elles sont exécutées par un processeur, amènent le processeur à mettre en oeuvre le procédé selon l'une quelconque des revendications 1 à 7.
